# EUROPEAN PATENT SPECIFICATION

(11) **EP 0 570 596 B1**
(45) Date of publication and mention of the grant of the patent: **09.10.1996**
(21) Application number: 92924888.8
(22) Date of filing: 08.12.1992
(51) Int. Cl.: F24F 11/02, G05D 23/19

(54) **POWER FEEDER OF AIR CONDITIONER**
ANLAGE FÜR KRAFTSTROMZULEITUNG AN KLIMAANLAGE
INSTALLATION D'AMENEE DE COURANT POUR CLIMATISEUR

(30) Priority: 09.12.1991 JP 324588/91
(43) Date of publication of application: 24.11.1993
(73) Proprietor: DAIKIN INDUSTRIES, LTD., Kita-ku, Osaka 530 (JP)
(72) Inventor: SOGABE, Masaharu Kanaoka Factory Sakai Plant, 1304, Kanaoka-cho, Sakai-shi Osaka 591 (JP); SHIMA, Kiyoshi Kanaoka Factory Sakai Plant, Sakai-shi Osaka 591 (JP); YOSHISAKA, Keiichi Kanaoka Factory Sakai Plant, 1304, Kanaoka-cho, Sakai-shi Osaka 591 (JP); SUMIDA, Hisashi Kanaoka Factory Sakai Plant, 1304, Kanaoka-cho, Sakai-shi Osaka 591 (JP)
(74) Representative: Klingseisen, Franz, Dipl.-Ing.
(86) International application number: PCT/JP92/01598
(87) International publication number: WO 93/12393

(56) References cited:
- JP-A- 2 085 634
- JP-A- 2 272 252
- JP-A-61 231 342
- PATENT ABSTRACTS OF JAPAN vol. 014, no. 335 (M-1000)19 July 1990 & JP-A-02 115 645 (MATSUSHITA) 27 April 1990

## Description

The invention relates to an air conditioning installation comprising a plurality of air conditioning control units connected to a single controller.

JP-A-02115645 discloses a controller which controls the operation of a number of air conditioners or the capacity thereof upon large power consumption such as in midsummer. The electric current is supplied for driving a compressor, a fan and the like.

Generally, as disclosed in Japanese Patent Application Laying Open Gazette No.2-85634, there has been an air conditioner in which a single remote controller is connected to a plurality of indoor control units for respectively controlling a plurality of indoor units so that control signals such as operation signals are supplied and received between the remote controller and each of the indoor control units to control an operation of air conditioning.

Between each indoor control unit and the remote controller, an electric power is supplied from the previously designated indoor control unit to the remote controller. In addition, an address is set to each indoor control unit and an error signal, wind direction signal and the like are transmitted therebetween.

In the above-mentioned air condition control machine, conventionally, the address of the indoor control unit for supplying the power to the remote controller is set to 0.

In case where the address of the indoor control unit is automatically set by a remote controller, however, the power cannot be supplied to the remote controller until the address is set. This invites a problem that a communication is not performed between the remote controller and the indoor control unit and the address is not automatically set.

Accordingly, the indoor control unit for supplying the power to the remote controller may be previously set as a hard ware. This, however, requires that a printed circuit board must be manufactured individually, so that the indoor control units cannot be standardized.

In view of the above problems, it is an object of the present invention to supply a power to the controller surely, with standardizing the air condition control units.

This object is achieved by the features in claims 1 and 2.

In the present invention, an air condition control unit for supplying a power is determined based on a specific number previously set with respect to each air condition control unit.

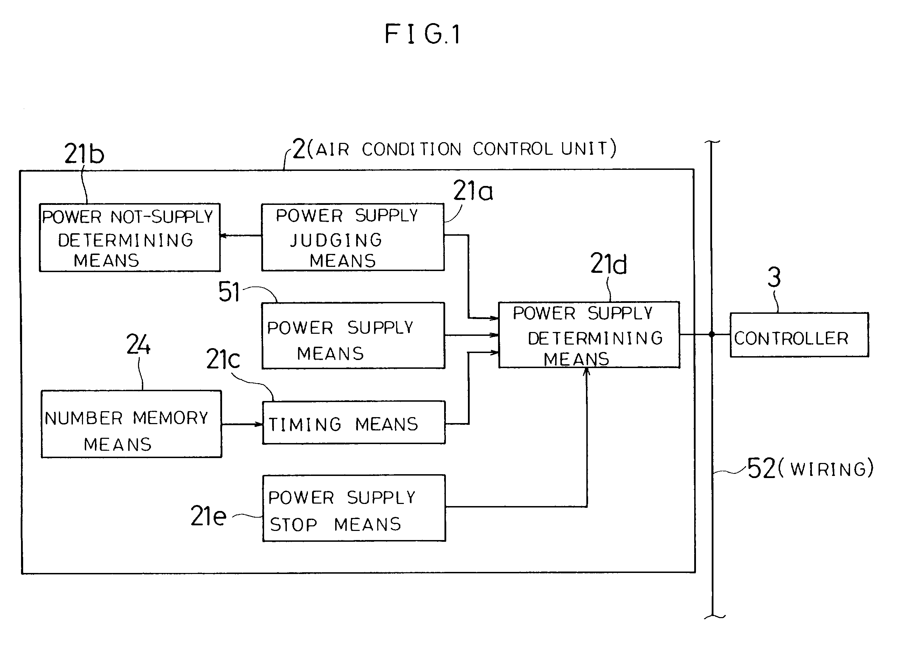

In detail, as shown in Fig.1, in an electric power supply apparatus of an air condition control machine (2) according to a first embodiment of the invention, it is premised that a plurality of air condition control units (2) are connected to a single controller (3) via wirings (52) and an operation of air conditioning is controlled by supplying and receiving a control signal between the controller (3) and the air condition control unit (2).

Provided at each air condition control unit (2) are number memory means (24) for previously memorizing respectively different specific number with respect to respective air condition control units (2) and power supply means (51) for supplying the power. Further, the air condition control unit (2) comprises power supply judging means (21a) for judging whether another air condition control unit (2) supplies the power to the controller (3) by means of monitoring the wirings (52), power not-supply determining means (21b) for determining the air condition control unit of its own to be a unit which does not supply the power to the controller (3) when the power supply judging means (21a) judges the controller (3) receives the power, timing means (21c) for setting a power supply timing based on the specific number, and power supply determining means (21d) for determining the air condition control unit of its own to be a unit which supplies the power to the controller (3) when the power supply judging means (21a) judges the controller (3) receives no power at the power supply timing by the timing means (21f) and for making the power supply means (51) supply the power to the controller (3).

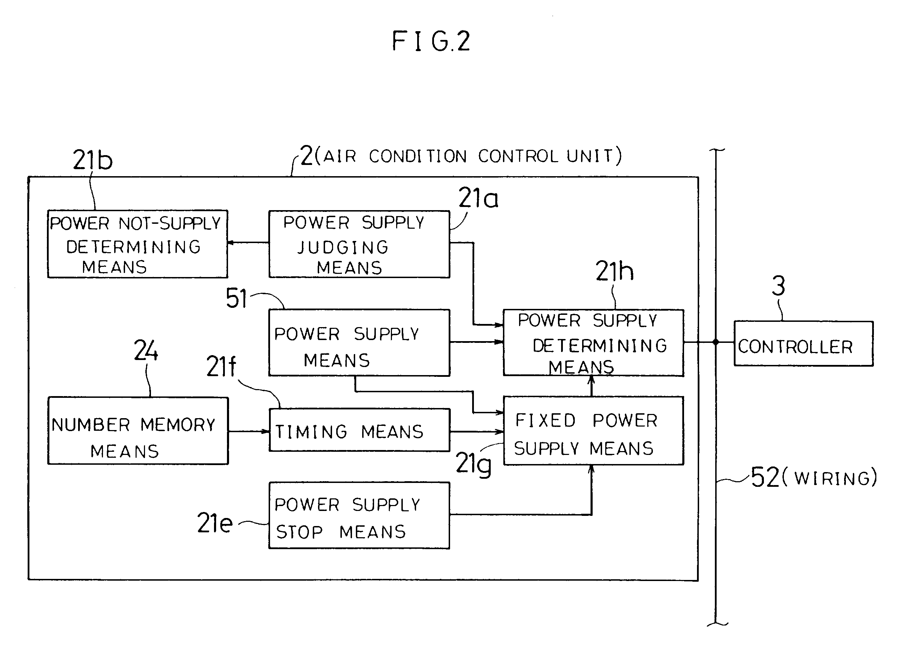

In an electric power supply apparatus of an air condition control machine according to a second embodiment of the present invention, the same as in the first embodiment is premised. As shown in Fig.2, each air condition control unit (2) comprises: number memory means (24) for previously memorizing respectively different specific number with respect to respective air condition control units (2); power supply means (51) for supplying an electric power; power supply judging means (21a) for judging whether another air condition control unit (2) supplies the power to the controller (3) by monitoring the wirings (52); and power not-supply determining means (21b) for determining the air condition control unit of its own to be a unit for supplying no power to the controller (3) when the power supply judging means (21a) judges the controller (3) receives the power. The air condition control unit (2) further comprises: timing means (21f) for setting a power supply timing based on each of plural sectional numbers into which the specific number is divided; fixed power supply means (21g) for making the power supply means (51) supply the power to the controller (3) at the power supply timing by the timing means (21f); and power supply determining means (21h) for determining the air condition control unit of its own to be a unit for supplying the power to the controller (3) when the fixed power supply means (21g) brings the power supply of the power supply means (51) with respect to all sectional numbers.

In an electric power supply apparatus of an air condition control machine according to the first and second embodiments, additionally, provided is power supply stop means (21e) for stopping the power supply when detecting an irregularity of a power source at monitoring the wirings (52).

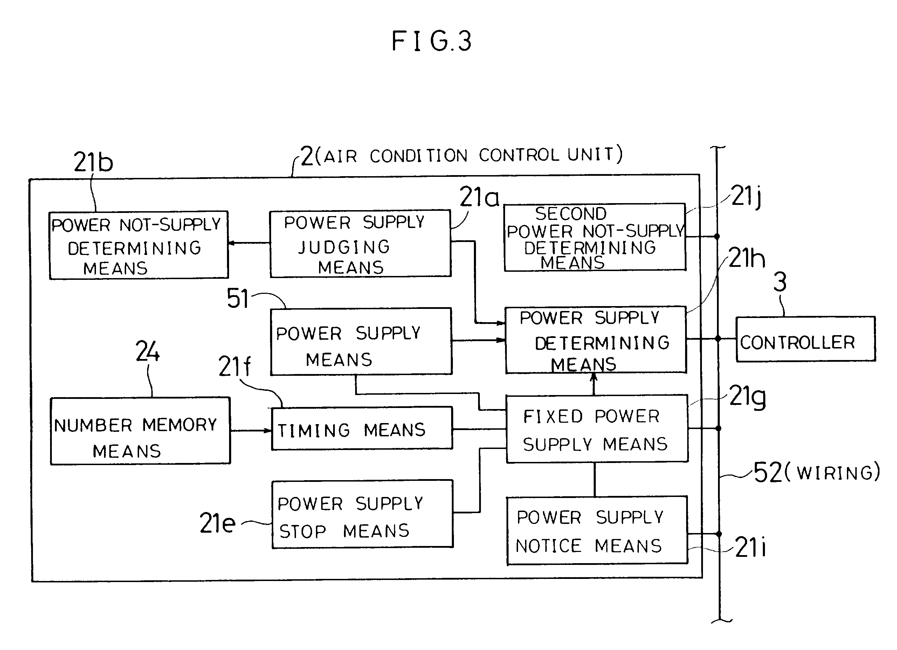

In an electric power supply apparatus of an air condition control machine according to a third embodiment of the invention, the same as in the first embodiment is premised. As shown in Fig.3, the air condition control unit (2) comprises: number memory means (24) for previously memorizing respectively different specific number with respect to respective air condition control units (2); power supply means (51) for supplying an electric power; power supply judging means (21a) for judging whether another air condition control unit (2) supplies the power to the controller (3) by monitoring the wirings (52), and first power not-supply determining means (21b) for determining the air condition control unit (2) of its own to be a unit for supplying no power to the controller (3) when the power supply judging means (21a) judges the controller (3) receives the power. The air condition control unit (2) further comprises: timing means (21f) for setting a power supply timing based on each of plural sectional numbers into which the specific number is divided; fixed power supply means (21g) for making the power supply means (51) supply the power to the controller (3) at the power supply timing by the timing means (21f); and power supply notice means (21i) for outputting a notice signal of a previously set voltage when the fixed power supply means (21g) starts the power supply. In addition, provided at the air condition control unit (2) are second power not-supply determining means (21j) for determining the air condition control unit of its own to be a unit for supplying no power to the controller (3) when a notice signal from another air condition control unit is detected by monitoring the wirings (52), power supply stop means (21e) for stopping the power supply according to the fixed power supply means (21g) with respect to a single power supply timing when an irregularity of the power source is detected by monitoring the wirings (52), and power supply determining means (21h) for determining the air condition control unit of its own to be a unit which supplies the power to the controller (3) when the fixed power supply means (21g) brings a normal power supply with respect to all sectional numbers.

Under the above construction, in the first embodiment, the power supply judging means (21a) judges whether the power from another air condition control unit (2) is supplied to the controller (3) when the power is turned ON. When the power supply judging means (21a) judges the controller (3) to receive the power, the power not-supply determining means (21b) determines the air condition control unit (2) of its own to be a unit which does not supply the power.

On the other hand, the timing means (21c) sets a power supply timing based on the specific number previously set to the unit of its own. For example, the timing means (21c) sets the power supply timing operated by multiplying the specific number by 10ms. Then, when the power supply judging means (21a) judges the controller (3) to receive no power at the power supply timing, the power supply determining means (21d) determines the air condition control unit of its own to be a unit which supplies the power to the controller (3), the power is supplied to the controller (3) from the power supply means (51) and a control signal is supplied and received between each air condition control unit (2) and the controller (3).

In the second embodiment, as well as in the first embodiment, the power supply judging means (21a) judges whether the power from the other air conditioning unit (2) is supplied to the controller (3) when the power is turned ON. When the power supply judging means (21a) judges the controller (3) receives the power, the power not-supply determining means (21b) determines the air conditioning control unit (2) of its own to be a unit which does not supply the power.

On the other hand, the timing means (21f) sets the power supply timings based on the plural sectional numbers into which the specific number of the unit of its own is divided. For example, the timing means (21f) sets three power supply timings operated by multiplying the specific number composed of 24 bits by 10ms per sectional number of 1 byte thereof. Then, the fixed power supply means (21g) brings the power supply to the controller (3) at the power supply timing.

When the power is supplied from another air condition control unit (2) between the power supply timings of the unit, the power not-supply determining means (21b) determines the unit of its own to be a unit which does not supply the power. On the other hand, when the power is normally supplied, the power supply determining means (21h) determines the unit of its own to be a unit for supplying the power to the controller (3), the power is supplied from the power supply means (51) to the controller (3), and a control signal is supplied and received between each air condition control unit (2) and the controller (3).

When there is something wrong with the power source at each power supply timings, the power supply stop means (21e) stops the power supply.

In the third embodiment, as well as in the second embodiment, the power supply judging means (21a) judges whether the power is supplied from another air condition control unit (2) to the controller (3). When the power supply judging means (21a) judges the controller (3) receives the power, the first power not-supply determination means (21b) determines the unit of its own to be a unit which does not supply the power.

On the other hand, the timing means (21f) sets the power supply timings based on the plural sectional numbers into which the specific number of the unit of its own is divided. Then, the fixed power supply means (21g) brings the power supply for a set time to the controller (3) at the power supply timing and the power supply notice means (21i) outputs the notice signal of the power supply.

When the power is supplied from another air condition control unit (2) to the controller between the each power supply timings of the unit, the first power not-supply determining means (21b) determines the unit of its own to be a unit for supplying no power. At the time, when the notice signal is output from another air condition control unit (2), the second power not-supply determining means (21i) determines the unit of its own to be a unit for supplying no power. On the other hand, when there is something wrong with the power source at each power supply timing, the power supply stop means (21e) stops the power supply of the fixed power supply means (21g). When the power is normally supplied, the power supply determining means (21h) determines the unit of its own to be a unit for supplying the power to the controller (3), the power is supplied from the power supply means (51) to the controller (3), and a control signal is supplied and received between each air condition control unit (2) and the controller (3).

According to the first embodiment, since the air condition control unit (2) which first supplies the power based on previously set specific number is set to the unit for supplying the power, the power supply to the controller (3) can be surely executed. Thus, a communication accurately starts between the controller (3) and each air condition control unit (2).

As a result, an address of the indoor control unit can be automatically set and printed circuit boards of the air condition control units can be standardized. Thus, the air condition control unit can be easily manufactured.

According to the second embodiment, since the power supply timing is set with the specific number divided into plural numbers, the unit for supplying the power can be determined at a short time.

According to the third embodiment, since the power supply is noticed, even when the power supply of the fixed power supply means (21g) synchronizes with that of another air condition control unit, the unit for supplying the power can be surely determined based on a difference between the specific numbers.

### [Brief Description of Drawings]

Fig.1 is a block diagram showing a construction of the first electric power supply apparatus, Fig.2 is a block diagram showing a construction of the second electric power supply apparatus, and Fig.3 is a block diagram showing a construction of the third electric power supply apparatus.

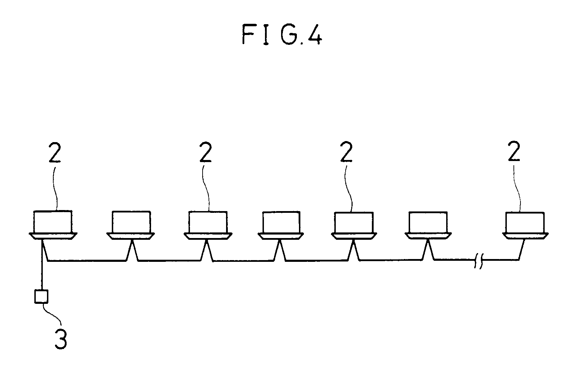

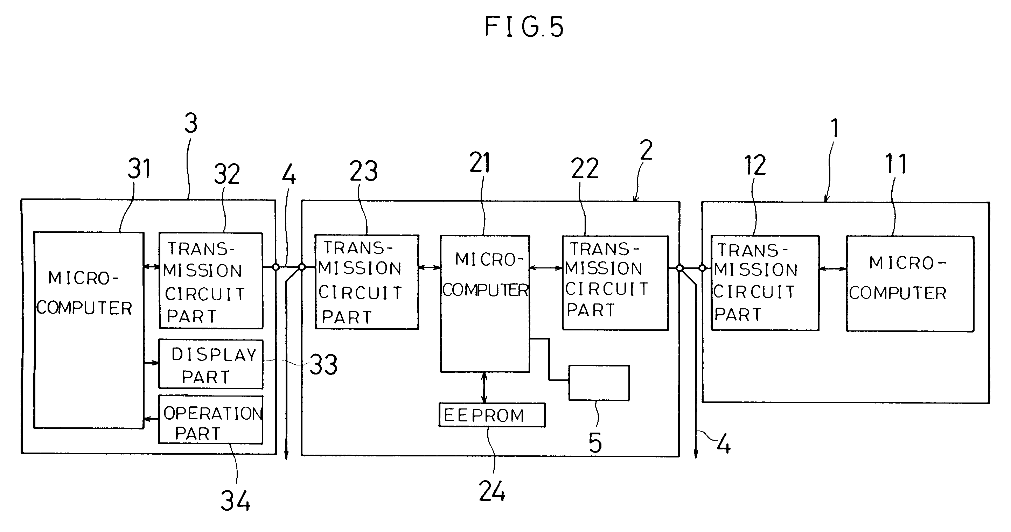

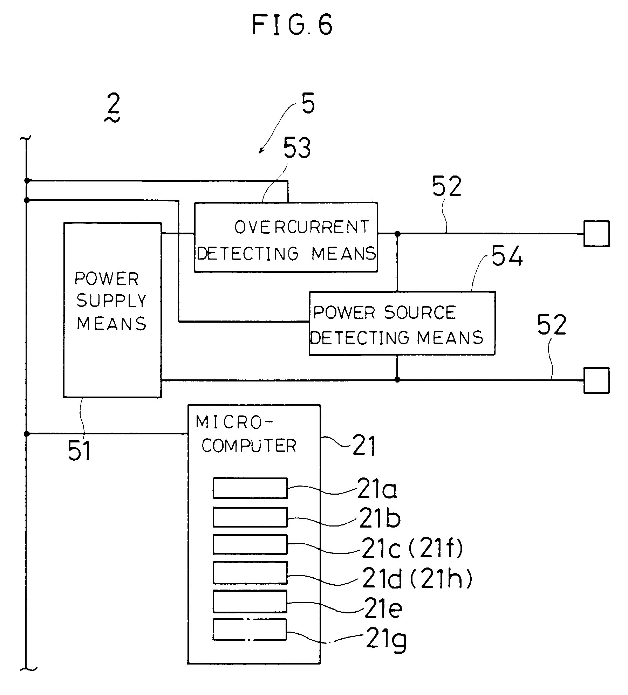

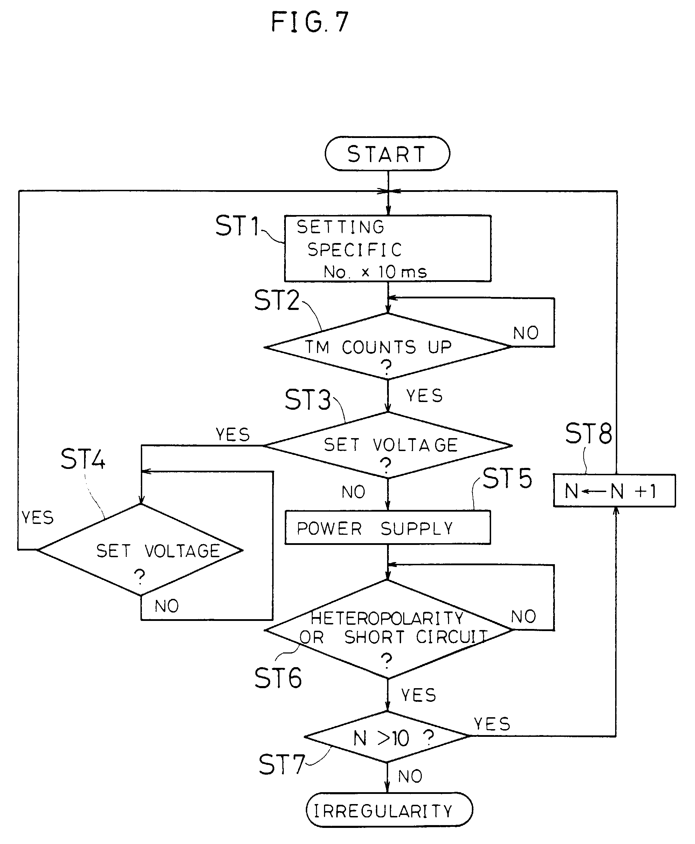

Figs.4-7 show a first embodiment of the invention. Fig.4 is a diagram showing an arrangement of system of an air conditioner, Fig.5 is a circuit block diagram showing a construction of the air conditioner, Fig.6 is a circuit block diagram showing a power supply circuit, and Fig.7 is a control flow chart showing an operation of a power supply.

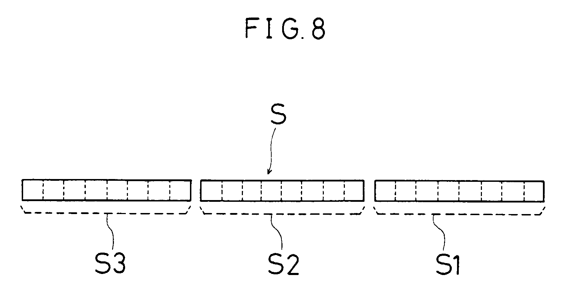

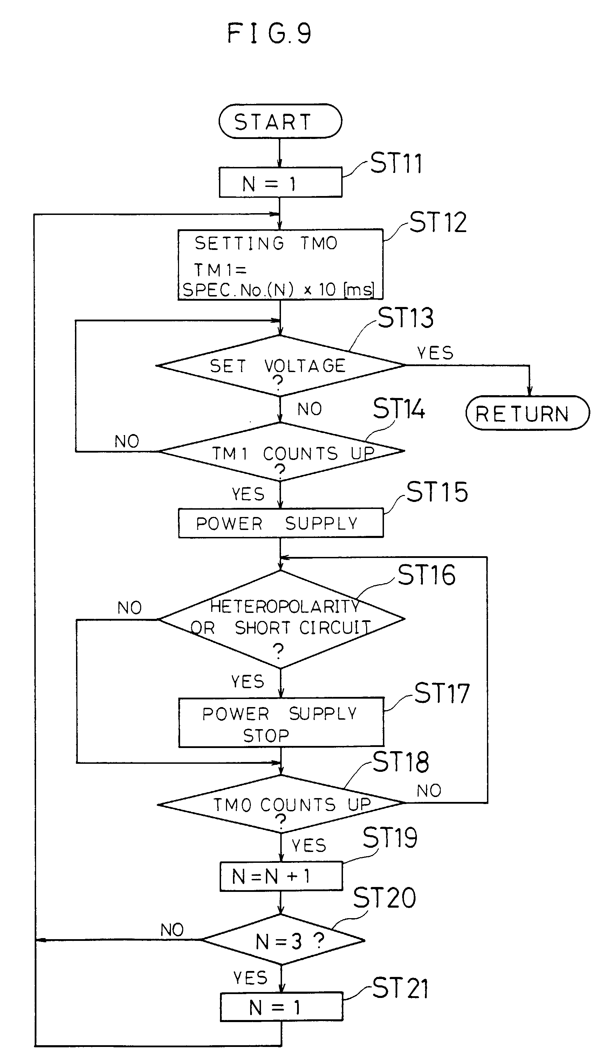

Figs.8 and 9 show a second embodiment of the invention. Fig.8 is a diagram of a bit arrangement indicating a specific number, and Fig.9 is a control flow chart showing an operation of a power supply.

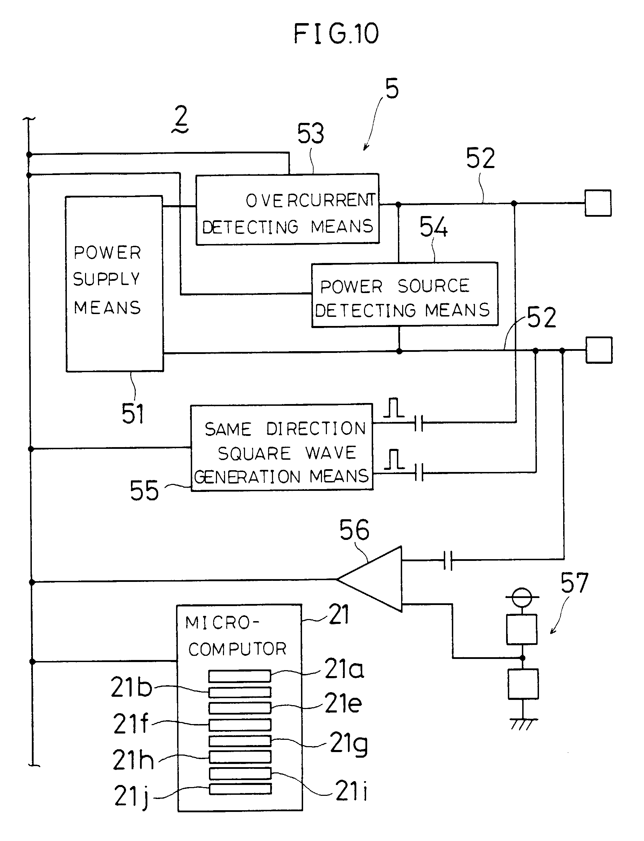

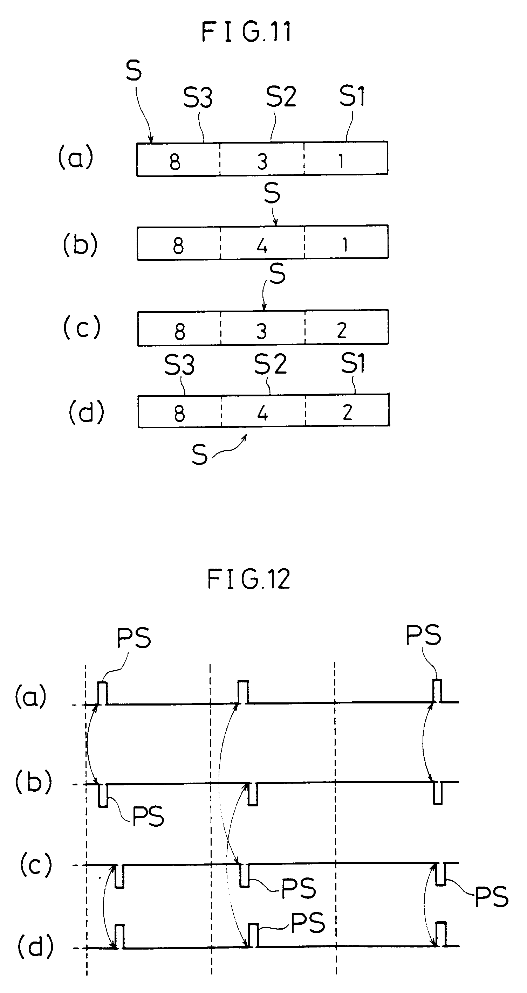

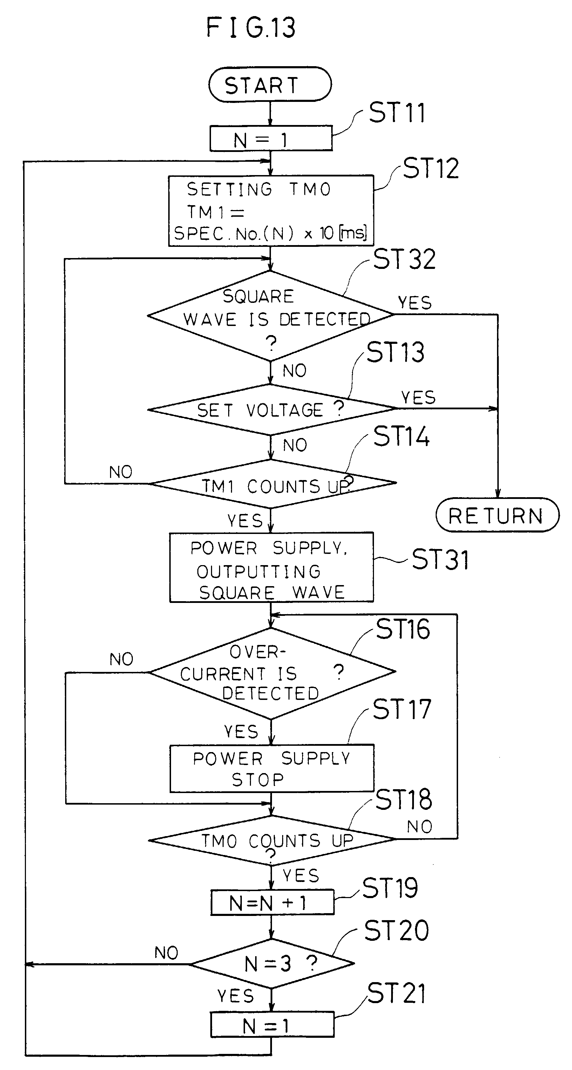

Figs.10-13 show a third embodiment of the invention. Fig.10 is a circuit block diagram showing a power supply circuit, Fig.11 is a diagram showing an arrangement of sectional numbers of each specific number, Fig.12 is a timing chart of an operation of each power supply, and Fig.13 is a control flow chart showing an operation of a power supply.

### [Best Mode for Carrying out the Invention]

Detailed description is made below about embodiments of the invention referring to accompanying drawings.

As shown in Figs.4 and 5, reference numeral (1) indicates an outdoor control unit for controlling an outdoor unit and (2) indicates an indoor control unit for controlling an indoor unit. The outdoor control unit (1) is connected to a plurality of indoor control units (2) and a single remote controller (3) is connected to a plurality of (at most sixteen) indoor control units (2) via transmission paths (4).

The outdoor control unit (1) has a micro-computer (11) and a transmission circuit part (12) which is connected to the micro-computer (11). The transmission circuit part (12) is connected to each indoor control unit (2) via the transmission paths (4) to supply to the indoor control unit (2) and receive therefrom a control signal of air condition load and the like.

Further, each indoor control unit (2) serves as an air condition control unit having a micro-computer (21) and transmission circuit parts (22), (23) which are connected to the micro-computer (21), wherein the transmission circuit part (22) is connected to the outdoor control unit (1) via the transmission path (4) and the transmission circuit part (23) is connected to the remote controller (3) via the transmission path (4) so that a control signal such as an error signal, wind direction signal or the like of the indoor control unit is supplied and received between the indoor control unit (2) and the remote controller (3).

Furthermore, the remote controller (3) serves as a controller having a micro-computer (31), a transmission circuit part (32) which is connected to the micro-computer (31), a display part (33) connected to the micro-computer (31) for displaying an operation or the like, and an operation part (34) connected to the micro-computer (31) for inputting an operation signal or the like. The transmission circuit part (32) is connected to each indoor control unit (2).

On the other hand, a power supply circuit (5) is provided at the indoor control unit (2). The power supply circuit (5) includes, as shown in Fig.6, power supply means (51) having a power source to store a power for control. The power supply means (51) is connected to each indoor control unit (2) and the remote controller (3) via two power source lines (52) as wirings. The power source lines (52) are connected to over-current detecting means (53) for detecting an overcurrent and power source detecting means (54) for detecting a power supply from the power supply means (51) to the remote controller (3). An EEPROM (24) is provided at each indoor control unit (2) and composes number memory means in which a specific number is previously memorized. The specific number is composed of 24 bits as a bit row of a set length. Respective different specific numbers are set to respective indoor control units at, for example, manufacturing and shipping the units.

In addition, as a feature of the electric power supply apparatus in the first embodiment, power supply judging means (21a), power not-supply determining means (21b), timing means (21c) and power supply determining means (21d) are provided at the micro-computer (21) of the indoor control unit (2). The power supply judging means (21a) monitors the power source lines (52) in such a manner as to receive a detection signal from the power source detecting means (54), and judges whether another indoor control unit (2) is in a state which supplies the power to the remote controller (3). The power not-supply determining means (21b) determines the unit of its own to be a unit which does not supply the power to the remote controller (3) when the power supply judging means (21a) judges that the power is supplied to the remote controller (3). The timing means (21c) sets a power supply timing based on the specific number, for example, in such a manner as to calculate by multiplying the specific number by 10ms. Moreover, when the power supply judging means (21a) judges that the power is not supplied to the remote controller (3) at the power supply timing set by the timing means (21c), the power supply determining means (21d) determines the unit of its own to be a unit which supplies the power to the remote controller (3), and leads the power supply means (51) to supply the power to the remote controller (3).

Power supply stop means (21e) is provided at the microcomputer (21) of the indoor control unit (2) for stopping the power supply, when the power supply stop means (21e) receives a detection signal from the overcurrent detecting means (53) and detects a connection error due to heteropolarity.

Description is made next about an operation of power supply from the indoor control unit (2) to the remote controller (3), referring to a control flow chart of Fig.7.

When the power is turned ON, an error count N is initially set to 0. At a step ST1, a specific number of the indoor control unit is read out from the EEPROM (24) and a timer TM for the power supply timing is set by multiplying the specific number by 10ms.

Then, the routine proceeds to a step ST2 and judged is whether the time of the timer TM is up. The routine is kept waiting at the step ST2 until the time is up. When the time is up, the routine proceeds to a step ST3. At the step ST3, judged is whether the remote controller (3) has a set voltage, that is, whether the power is supplied from the other control unit (2) to the remote controller (3), by receiving a detection signal from the power source detecting means 54.

At the step ST3, when that the power is supplied to the remote controller (3) is judged, the unit is determined to be a unit which does not supply the power to the remote controller (3) and the judgment is made YES, so that the routine proceeds to a step ST4. At the step ST4, judged is whether the remote controller (3) does not have a set voltage with receiving a detection signal from the power source detecting means (54). In case where a set voltage exists with the power supplied to the remote controller (3), the routine is kept waiting at the step ST4. On the contrary, when the remote controller (3) does not have the set voltage owing to a stop of the power supply, the routine returns to the step ST1.

At the step ST3, when a set low voltage is detected and that the power is not supplied to the remote controller (3) is judged, the judgment is made NO and the unit is determined to be a unit which supplies the power, so that the routine proceeds to a step ST5. At the step ST5, the power is supplied to the remote controller (3) from the power supply means (51). Thereafter, a signal is supplied and received between each indoor control unit (2) and the remote controller (3) thanks to the power supply.

Then, the routine proceeds from the step ST5 to the step ST6. Judged is whether the power source is heteropolar or whether a short circuit is detected by receiving a detection signal of the overcurrent detecting means (53). In detail, when the power supply source of the remote controller (3) is heteropolar due to a connection error, an overcurrent flows. This overcurrent brings a detection of heteropolarity or the like. In case where the heteropolarity or the like is not detected, the routine is kept waiting at the step ST6. On the contrary, when the heteropolarity or the like is detected, the routine proceeds from the step ST6 to a step ST7. At the step ST7, judged is whether the error count N is more than ten. When the error count N is more than ten, the routine proceeds to a step ST8. At the step ST8, the routine returns to the step ST1 by increasing the error count N by one. Thereafter, the above-mentioned operation is repeated and when the error count N is more than ten, the judgment at the step ST7 is made NO, so that an operation for irregularity, that is, an operation for stopping the power supply is executed.

According to the first embodiment, since the indoor control unit which initially starts the power supply based on the previously set specific number is set to the unit for supplying the power, the power is surely supplied to the remote controller (3). As a result, a communication can start correctly between the remote controller (3) and each indoor control unit (2).

Consequently, an address of the indoor control unit (2) can be automatically set and the printed circuit boards of each indoor control unit (2) can be standardized. Thus, the indoor control unit (2) can be easily manufactured.

Fig.9 shows a control flow of a power supply apparatus according to a second embodiment. In this embodiment, as shown in Fig.6, another timing means (21f) is provided instead of the timing means (21c) in the first embodiment and fixed power supply means (21g) and power supply determining means (21h) are provided instead of the power supply determining means (21d).

As shown in Fig.8, the timing means (21f) sets three power supply timings based on sectional numbers S1-S3 which are assigned to respective sectional bit codes into which the specific number S is divided per byte. According to the first embodiment, the power supply timing based on the specific number itself is fairly long. Therefore, the power supply timing in this embodiment is set based on the sectional numbers S1-S3 divided per byte.

The fixed power supply means (21g) makes the power supply means (51) supply the power to the remote controller (3) at each power supply timing of the timing means (21c). The power supply determining means (21h) determines the control unit of its own to be a unit which supplies the power to the remote controller (3) when the fixed power supply means (21g) properly supplies the power with respect to the sectional numbers S1-S3 of all sectional bit codes.

Description is made about an operation of the power supply from the indoor control unit (2) to the remote controller (3), referring to a control flow chart of Fig.9.

When the power is turned ON, a count N for sectional number is set to 1 at a step ST11, in detail, set so that a power is supplied with respect to a first byte of the specific number. Then, when the routine proceeds to a step ST12, a fixed timer TM0 is set to a fixed time and a power supply timer TM1 is set to a power supply timing operated by multiplying the sectional number S1 of the first byte of the specific number by 10ms.

Then, the routine proceeds to a step ST13 to judge whether the power source line (52) has a set voltage by receiving a detection signal from the power source detecting means 54. In detail, judged is whether the power is supplied from the other indoor control unit (2) to the remote controller (3). When the power source line (52) has a set voltage, which means that the power is supplied from another indoor control unit (2). The unit is determined to be a unit which does not supply the power and the routine returns to a main flow without supplying the power to the remote controller (3).

On the contrary, at the step ST13, in case where the power source line (52) does not have the set voltage, the remote controller (3) does not receive the power and a judgment is NO. Thus, the routine proceeds to a step ST14. At the step ST14, judged is whether the time of the power supply timer TM1 is up. In detail, initially judged is whether a set power supply timing comes based on the sectional number S1 of the first byte of the specific number. Then, the routine returns to the step ST13 until the time of the power supply timer TM1 is up. When the time of the power supply timer TM1 is up while no other indoor control units supply the power, the routine proceeds from the step ST14 to a step ST15 and the fixed power supply means (21g) starts the power supply.

Then, the routine proceeds to a step ST16 and judged are whether the power source is heteropolar or whether the power source short-circuits. In detail, as well as at the step ST6 of the first embodiment, the power source is judged to be heteropolar or the like by receiving the detection signal from the overcurrent detecting means (53). When the power source is heteropolar, the routine proceeds from the step ST16 to a step ST17. At the step ST17, the power supply stop means (21e) stops the power supply by the fixed power supply means (21g) and the routine proceeds to a step ST18. In normal case where the heteropolarity or the like is not detected at the step ST16, the judgment is NO and the routine proceeds from the step ST16 to a step ST18.

At the step ST18, judged is whether the time of the fixed timer TM0 is up. In detail, judged is whether the fixed power supply means (21g) supplies the power for a set time. The routine returns to the step ST16 until the time of the fixed timer TM0 is up, then the routine proceeds from the step ST18 to a step ST19 when the time is up. Then, the count N for the sectional number is increased by one and the routine proceeds to a step ST20. At the step ST20, judged is whether the count N for the sectional number is 3. In detail, judged is whether the power is supplied based on each of three bytes sectional numbers of the specific number. Because the present time is when the power is supplied with respect to the sectional number S1 of the first byte, the routine returns from the step ST20 to the step ST11 in order to supply the power based on the sectional number S2 of a second byte.

Thereafter, the above-mentioned operation is executed with respect to the sectional number S2 of the second byte. When the other indoor control unit (2) supplies the power during the power supply with respect to the sectional number S2, the judgment at the step ST13 is YES so that the unit is determined not to supply the power.

When the above-mentioned operation is executed with respect to each of three bytes sectional numbers S1-S3 of the specific numbers and the power supply is normally over, the judgment at the step ST20 is YES and the routine proceeds to a step ST21. At the step ST21, the count N for sectional number returns to 1 so that the routine returns to the step ST11. Then, the unit is determined to supply the power and the power is supplied from the power supply means (51) to the remote controller (3).

Further, when the heteropolarity of the power source is detected at the step ST17, the routine returns from the step ST21 to the step ST12 and the power is supplied repeatedly based on each of three bytes sectional numbers S1-S3.

Accordingly, since the power can be supplied to the remote controller (3) as well as in the first embodiment, the communication can start accurately between the remote controller (3) and each indoor control unit (2). Consequently, the address of the indoor control unit can be automatically set and the printed circuit boards of indoor control units (2) can be standardized.

Further, since the power supply timing is set, dividing the specific number into plural sections, the unit for supplying the power can be determined at a short time.

Fig.13 shows a control flow of an electric power supply apparatus according to a third embodiment. In this embodiment, as shown in Fig.10, power supply notice means (21i) and second power not-supply determining means (21j) are provided in addition to the apparatus in the second embodiment. The power not-supply determining means (21b) in the second embodiment serves as first power not-supply determining means (21b) in this embodiment.

The power supply circuit (5) has square wave generation means (55) connected between power source lines (52) and the micro-computer (21), and a comparator (56). The square wave generation means (55) generates a square wave (notice signals) in a same direction of a previously set voltage. The comparator (56) is connected to reference voltage generation means (57). When another indoor control unit (2) outputs a square wave as a notice signal, the comparator (56) detects the notice signal and outputs the detection signal to the micro-computer (21).

The power supply notice means (21i) outputs the notice signal to the square wave generation means (55) when the fixed power supply means (21g) supplies the power. The second power not-supply determining means (21j) determines the unit of its own to be a unit which does not supply the power to the remote controller (3) when the other indoor control unit (2) detects the notice signal by receiving the detection signal from the comparator (56).

When the specific number S is divided into three sectional numbers S1-S3 as in the second embodiment, there may be a case where the unit for supplying the power cannot be determined owing to collision of the power supplies by the fixed power supply means (21g). In detail, there is a case with four indoor control units 2 having respectively deferent specific numbers S wherein the first indoor control unit (2) shown in Fig.11 (a) and the fourth indoor control unit (2) shown in Fig.11 (d) are connected to a positive polarity and the second indoor control unit (2) shown in Fig.11 (b) and the third indoor control unit (2) shown in Fig.11 (c) are connected to a negative polarity. As shown in Fig.12, when the first indoor control unit (2) and the second indoor control unit (2) execute respectively power supplies PS based on each sectional number S1 of the first byte, these power supplies PS collide with each other. Then, the power supply of the third indoor control unit (2) collides with that of the fourth indoor control unit (2) at the first byte. At the second byte, the power supply of the first indoor control unit (2) collides with that of the third indoor control unit (2), and the power supply of the second indoor control unit (2) collides with that of the fourth indoor control unit (2). At the third byte, the power supply of the first indoor control unit (2) collides with that of the second indoor control unit (2) and the power supply of the third indoor control unit (2) collides with that of the fourth indoor control unit (2).

Thus, the power supply stop means (21e) detects each synchronization of the power supply PS and the fixed power supply means (21g) repeats the power supply PS based on the power supply timing of the timing means (21f). As a result, the unit for supplying the power is not determined.

In this case, the indoor control unit (2) for initially executing the power supply PS with respect to each byte is determined by means of outputting the notice signal of the square wave.

Description is made about an operation of the power supply from the indoor control unit (2) to the remote controller (3), referring to a control flow chart in Fig.13.

The operation of the power supply in this embodiment has a step ST31 instead of the step ST15 in the second embodiment and a step ST32 provided between the step ST12 and the step ST13. The other procedures are the same as in the second embodiment.

In detail, at the step ST31, when the fixed power supply means (21g) starts the power supply, the square wave generation means (55) outputs a notice signal of the square wave. With the notice signal, the other indoor control units can detect that a single indoor control unit (2) has started the power supply to the remote controller (3).

At the step ST32, judged is whether another indoor control unit (2) outputs the notice signal. When another indoor control unit (2) outputs the notice signal based on the detection signal from the comparator (56), the unit is determined to be a unit which does not supply the power and the routine returns to a main flow without the power supply to the remote controller (3). In case where no other indoor control means (2) outputs the notice signal, the routine starts at the step ST13.

As shown in Fig.12, when the power supplies PS by the fixed power supply means (21g) collide with each other, the indoor control units 2 shown in Fig.12 (c) and Fig.12 (d) are first determined to be units which does not supply the power with the power supply PS based on the sectional numbers S1 at the first byte according to the notice signals from the indoor control units (2) shown in Fig.12 (a) and Fig.12 (b). The indoor control unit (2) shown in Fig.12 (b) is determined to be a unit which does not supply the power with the power supply PS based on the sectional numbers S2 at the second byte according to the notice signal from the indoor control unit (2) shown in Fig.12 (a), so that a single indoor control unit (2) is determined to be a unit which supplies the power.

Accordingly, as well as in the second embodiment, since the power can be surely supplied to the remote controller (3), the communication can accurately start between the remote controller (3) and each indoor control unit (2). Consequently, the addresses of the indoor control units (2) can be automatically set and the printed circuit boards of the indoor control units (2) can be standardized.

In addition, since the power supply is noticed, the unit for power supply can be without failure determined based on a deference between the specific numbers even if the power supply of the fixed power supply means (21g) collides with that of another indoor control unit (2).

In each of the above-mentioned embodiments, description is made about the power supply from the indoor control unit (2) to the remote controller (3). The power supply apparatus according to the present invention is applicable to a power supply from the indoor control unit (2) to a central controller or the like.

### [Industrial Applicability]

According to the electric power supply apparatus of the air condition control machine of the present invention, since the air condition control unit for supplying a power to a controller is automatically set, it is advantageous for standardization of the air condition control units and a power supply to the controller.

## Claims

1. An air conditioning installation comprising:
a plurality of air conditioning control units (2) connected to a single controller (3) through wirings (52) and wherein air conditioning operation is controlled by sending and receiving a control signal between the controller (3) and the air conditioning control unit (2), each of said air conditioning control units (2) comprising
- number memory means (24) for prior storing of different specific numbers in each of the air conditioning control unit (2)
- power supply means (51) for supplying electric power;
- power supply judging means (21a) for detecting whether another air conditioning control unit (2) is supplying electric power to the controller (3) by monitoring the wirings (52);
- power control means (21b) for determining not to supply electric power to the controller (3) when the power supply judging means (21a) detects that the controller (3) is receiving power:
- timing means 21(c) for setting a power supply time based on the specific number; and
power supply determining means (21d) for determining to supply electric power from the power supply means (51) to the controller (3) when the power supply judging means (21a) detects that the controller (3) is receiving no power at the power supply time set by the timing means (21c).

2. An air conditioning installation comprising:
a plurality of air conditioning control units (2) connected to a single controller (3) through wirings (52) and wherein air conditioning operation is controlled by sending and receiving a control signal between the controller (3) and the air conditioning control unit (2), each of said air conditioning control units (2) comprising
- number memory means (24) for prior storing of different specific numbers in each of the air conditioning control unit (2)
- power supply means (51) for supplying electric power;
- power supply judging means (21a) for detecting whether another air conditioning control unit (2) is supplying electric power to the controller (3) by monitoring the wirings (52);
- power control means (21b) for determining not to supply electric power to the controller (3) when the power supply judging means (21a) detects that the controller (3) is receiving power:
- timing means (21f) for setting power supply times each based on a sectional number which is received by division of the specific (S) numbers into several sections (S1,S2,S3)
- fixed power supply means (21g) for controlling the power supply means (51) to supply power to the controller (3) at the power supply times, and
power supply determining means (21h) for determining to supply electric power to the controller (3), when the fixed power supply means (21g) enables the power supply means (51) with respect to all sectional numbers (S1,S2,S3,).

3. Air conditioning installation according to claim 1 or 2, further comprising power supply interruption means (21e) for interrupting the power supply when an irregularity of a power source is detected by monitoring the wirings (52).

4. Air conditioning installation according to claim 2, comprising
first power control means (21b),
power supply notice means (21i) for providing a notice signal of a set voltage, when the fixed power supply means 21(g) begins to supply power,
further power control means (21j) for determining not to supply electric power to the controller (3) when a noticed signal from another air conditioning control unit (2) is detected by monitoring the wirings (52), and
power supply interruption means (21e) for interrupting the power supply from the fixed power supply means (21g) at a predetermined time, when an irregularity of a power source is detected by monitoring the wirings (52).

## Patentansprüche

1. Klimaanlagen-Einrichtung, die folgendes aufweist:
eine Vielzahl von Klimaanlagen-Steuereinheiten (2), die über Verdrahtungen (52) mit einer einzigen Steuerung (3) verbunden sind, und wobei eine Klimaanlagen-Operation durch Senden und Empfangen eines Steuersignals zwischen der Steuerung (3) und der Klimaanlagen-Steuereinheit (2) gesteuert wird, wobei jede der Klimaanlagen-Steuereinheiten (2) folgendes aufweist:
- eine Zahlenspeichereinrichtung (24) zum vorherigen Speichern unterschiedlicher spezifischer Zahlen in jeder der Klimaanlagen-Steuereinheiten (2),
- eine Leistungsversorgungseinrichtung (51) zur elektrischen Leistungsversorgung;
- eine Leistungsversorgungs-Entscheidungseinrichtung (21a), die durch Überwachen der Verdrahtungen (52) erfaßt, ob gerade eine andere Klimaanlagen-Steuereinheit (2) die Steuerung (3) mit elektrischer Leistung versorgt;
- eine Leistungssteuerungseinrichtung (21b) zum Bestimmen, daß die Steuerung (3) nicht mit elektrischer Leistung versorgt wird, wenn die Leistungsversorgungs-Entscheidungseinrichtung (21a) erfaßt, daß die Steuerung (3) gerade eine Leistung empfängt;
- eine Zeitgabeeinrichtung (21c) zum Einstellen einer Leistungsversorgungszeit basierend auf der spezifischen Zahl; und
- eine Leistungsversorgungs-Bestimmungseinrichtung (21d) zum Bestimmen, die Steuerung (3) mit elektrischer Leistung von der Leistungsversorgungseinrichtung (51) zu versorgen, wenn die Leistungsversorgungs-Entscheidungseinrichtung (21a) erfaßt, daß die Steuerung (3) bei der durch die Zeitgabeeinrichtung (21c) eingestellten Leistungsversorgungszeit gerade keine Leistung empfängt.

2. Klimaanlagen-Einrichtung, die folgendes aufweist:
eine Vielzahl von Klimaanlagen-Steuereinheiten (2), die durch Verdrahtungen (52) mit einer einzigen Steuerung (3) verbunden sind, wobei eine Klimaanlagen-Operation durch Senden und Empfangen eines Steuersignals zwischen der Steuerung (3) und der Klimaanlagen-Steuereinheit (2) gesteuert wird, wobei jede der Klimaanlagen-Steuereinheiten (2) folgendes aufweist:
- eine Zahlenspeichereinrichtung (24) zum vorherigen Speichern unterschiedlicher spezifischer Zahlen in jeder der Klimaanlagen-Steuereinheiten (2);
- eine Leistungsversorgungseinrichtung (51) zur elektrischen Leistungsversorgung;
- eine Leistungsversorgungs-Entscheidungseinrichtung (21a), die durch Überwachen der Verdrahtungen (52) erfaßt, ob gerade eine andere Klimaanlagen-Steuereinheit (2) die Steuerung (3) mit elektrischer Leistung versorgt;
- eine Leistungssteuerungseinrichtung (21b) zum Bestimmen, die Steuerung (3) nicht mit elektrischer Leistung zu versorgen, wenn die Leistungsversorgungs-Entscheidungseinrichtung (21a) erfaßt, daß die Steuerung (3) gerade Leistung empfängt;
- eine Zeitgabeeinrichtung (21f) zum Einstellen von Leistungsversorgungszeiten, die jeweils auf einer Teilzahl basieren, die durch Aufteilen der spezifischen Zahlen (S) in mehrere Teile (S1, S2, S3) erhalten wird;
- eine feste Leistungsversorgungseinrichtung (21g) zum Steuern der Leistungsversorgungseinrichtung (51), die Steuerung (3) bei den Leistungsversorgungszeiten mit Leistung zu versorgen, und eine Leistungsversorgungs-Bestimmungseinrichtung (21h) zum Bestimmen, die Steuerung (3) mit elektrischer Leistung zu versorgen, wenn die feste Leistungsversorgungseinrichtung (21g) die Leistungsversorgungseinrichtung (51) in bezug auf alle Teilzahlen (S1, S2, S3) freigibt.

3. Klimaanlagen-Einrichtung nach Anspruch 1 oder 2, die weiterhin eine Leistungsversorgungs-Unterbrechungseinrichtung (21e) aufweist, zum Unterbrechen der Leistungsversorgung, wenn durch Überwachen der Verdrahtungen (52) eine Unregelmäßigkeit einer Leistungsquelle erfaßt wird.

4. Klimaanlagen-Einrichtung nach Anspruch 2, die folgendes aufweist:
eine erste Leistungssteuerungseinrichtung (21b),
eine Leistungsversorgungs-Meldeeinrichtung (21i) zum Bereitstellen eines Signals zum Melden einer eingestellten Spannung, wenn die feste Leistungsversorgungseinrichtung (21g) eine Leistungsversorgung beginnt,
eine weitere Leistungssteuerungseinrichtung (21j) zum Bestimmen, die Steuerung (3) nicht mit elektrischer Leistung zu versorgen, wenn durch Überwachen der Verdrahtungen (52) ein Meldesignal von einer anderen Klimaanlagen-Steuereinheit (2) erfaßt wird, und
eine Leistungsversorgungs-Unterbrechungseinrichtung (21e) zum Unterbrechen der Leistungsversorgung von der festen Leistungsversorgungseinrichtung (21g) bei einer vorbestimmten Zeit, wenn durch Überwachen der Verdrahtungen (52) eine Unregelmäßigkeit einer Leistungsquelle erfaßt wird.

## Revendications

1. Installation de climatisation, comprenant:
- une pluralité d'unités de commande de climatisation (2) connectées à un régisseur, ou "contrôleur", unique (3) par l'intermédiaire de conducteurs (52), et dans lequel une opération de climatisation est commandée en envoyant et recevant un signal de commande entre le régisseur (3) et l'unité de commande de climatisation (2), chacune desdites unités de commande de climatisation (2) comprenant:
- des moyens de mémoire de numéro (24) pour mémorisation préalable de numéros spécifiques différents dans chacune des unités de commande de climatisation (2);
- des moyens de fourniture d'énergie (51) pour fournir de l'énergie électrique;
- des moyens de jugement de fourniture d'énergie (21a) pour détecter si une autre unité de commande de climatisation (2) est en train de fournir de l'énergie électrique au régisseur (3), en surveillant les conducteurs (52);
- des moyens de commande d'énergie (21b) pour déterminer de ne pas fournir de l'énergie électrique au régisseur (3) lorsque les moyens de jugement de fourniture d'énergie (21a) détectent que le régisseur (3) reçoit de l'énergie;
- des moyens de temporisation (21c) pour établir un temps de fourniture d'énergie basé sur le numéro spécifique; et
- des moyens de détermination de fourniture d'énergie (21d) pour déterminer de fournir de l'énergie électrique des moyens de fourniture d'énergie (51) au régisseur (3) lorsque les moyens de jugement de fourniture d'énergie (21a) détectent que le régisseur (3) ne reçoit pas d'énergie au temps établi par les moyens de temporisation (21c).

2. Installation de climatisation, comprenant:
- une pluralité d'unités de commande de climatisation (2) connectées à un régisseur, ou "contrôleur", unique (3) par l'intermédiaire de conducteurs (52), dans lequel une opération de climatisation est commandée en envoyant et recevant un signal de commande entre le régisseur (3) et l'unité de commande de climatisation (2), chacune desdites unités de commande de climatisation (2) comprenant:
- des moyens de mémoire de numéro (24) pour mémorisation préalable de numéros spécifiques différents dans chacune des unités de commande de climatisation (2);
- des moyens de fourniture d'énergie (51) pour fournir de l'énergie électrique;
- des moyens de jugement de fourniture d'énergie (21a) pour détecter si une autre unité de commande de climatisation (2) est en train de fournir de l'énergie au régisseur (3), en surveillant les conducteurs (52);
- des moyens de commande d'énergie (21b) pour déterminer de ne pas fournir d'énergie électrique au régisseur (3) lorsque les moyens de jugement de fourniture d'énergie (21a) détectent que le régisseur (3) est en train de recevoir de l'énergie;
- des moyens de temporisation (21f) pour établir des temps de fourniture d'énergie basés chacun sur un numéro de section qui est reçu par division des numéros spécifiques (S) en plusieurs sections (S1, S2, S3);
- des moyens de fourniture d'énergie fixe (21g) pour commander les moyens de fourniture d'énergie (51) pour fournir de l'énergie au régisseur (3) aux temps de fourniture d'énergie; et
- des moyens de détermination de fourniture d'énergie (21h) pour déterminer de fournir de l'énergie électrique au régisseur (3) lorsque les moyens de fourniture d'énergie fixe (21g) valident les moyens de fourniture d'énergie (51) pour tous les numéros de sections (S1, S2, S3).

3. Installation de climatisation selon la revendication 1 ou ou 2, comprenant en outre des moyens d'interruption de fourniture d'énergie (21e) pour interrompre la fourniture d'énergie lorsqu'une irrégularité d'une source d'énergie est détectée en surveillant les conducteurs (52).

4. Installation de climatisation selon la revendication 2, comprenant:
- des premiers moyens de commande d'énergie (21b);
- des moyens de notification de fourniture d'énergie (21i) pour fournir un signal de notification d'une tension fixée lorsque les moyens de fourniture d'énergie fixe (21g) commencent à fournir de l'énergie;
- d'autres moyens de commande d'énergie (21j) pour déterminer de ne pas fournir d'énergie électrique au régisseur (3) lorsqu'un signal de notification issu d'une autre unité de commande de climatisation (2) est détecté en surveillant les conducteurs (52) pour interrompre la fourniture d'énergie à partir des moyens de fourniture d'énergie fixe (21g) à un temps prédéterminé lorsqu'une irrégularité d'une source d'énergie est détectée en surveillant les conducteurs (52).
